## Europäisches Patentamt

## European Patent Office

## Office européen des brevets

(11) Veröffentlichungsnummer: **0 154 999**
**A2**

(12) **EUROPÄISCHE PATENTANMELDUNG**

(21) Anmeldenummer: **85102906.6**

(22) Anmeldetag: **14.03.85**

(51) Int. Cl.⁴: **G 01 N 27/12**

(30) Priorität: **14.03.84 DE 3409401**

(43) Veröffentlichungstag der Anmeldung: **18.09.85**
Patentblatt **85/38**

(84) Benannte Vertragsstaaten: **AT BE CH DE FR GB LI NL**

(71) Anmelder: **Lück, Winfried, Dr.-Ing., Rastatter Strasse 44, D-7500 Karlsruhe 51 (DE)**

(72) Erfinder: **Lück, Winfried, Dr.-Ing., Rastatter Strasse 44, D-7500 Karlsruhe 51 (DE)**

(74) Vertreter: **Liesegang, Roland, Dr.-Ing., Sckellstrasse 1, D-8000 München 80 (DE)**

(54) **Wasserdampfdruckkompensierende Feuchtemesseinrichtung.**

(57) Eine wasserdampfdruckkompensierende Feuchtemesseinrichtung weist drei in Dickschichttechnik auf zwei Keramikplättchen (8, 9) aufgebrachte Schichten auf, nämlich eine Feuchtefühlschicht (1), eine Heizerschicht (2) und eine Temperaturfühlschicht (3). Die Feuchtefühlschicht und die Heizerschicht sind über eine externe Regelelektronik mit Regler (5) gekoppelt, welcher den Heizstrom der Heizerschicht (2) beeinflusst. Dadurch wird die Feuchtefühlschicht von der Regelung entlastet.

**Dr.-Ing. Roland Liesegang**

: : .:. Patentanwalt

European Patent Attorney

Sckellstrasse 1
D-8000 München 80
Telefon (089) 4 48 24 96

Telex 5 214 382 pali d
Telekopierer (089) 27 20 480. 27 20 481
Telegramme patemus münchen

Postscheck München 394 18-802
Hypobank München 6 400 194 333
Reuschelbank München 2 603 007

0154999

- ¼ -

Wasserdampfdruckkompensierende Feuchtemeßeinrichtung

Die Erfindung betrifft eine wasserdampfdruckkompensierende Feuchtemeßeinrichtung mit den Merkmalen des
Oberbegriff des Anspruchs 1.

Bei einer bekannten Feuchtemeßeinrichtung (W. Lück:
"Feuchtigkeit", Oldenbourg-Verlag, München, 1964,
S. 585), der das auch bei der Erfindung angewendete
Meßprinzip zugrundeliegt, umschlingen zwei sich nicht
berührende Edelmetalldrähte ein Thermometer, das
in einem mit wässriger Lithiumchlorid (LiCl)-Lösung
getränkten Gewebeschlauch steckt. An den Elektrodendrähten liegt eine kleine Wechselspannung, die über
die leitende Feuchtefühlschicht der LiCl-Lösung einen
elektrischen Strom fließen läßt. Der Strom erwärmt
die Schicht und das Thermometer. Die Schicht kann
aber höchstens so warm werden, daß die relative Feuchte der den Fühler unmittelbar umgebenden Luft auf
nahezu genau 10% gesunken ist. Unterhalb dieser relativen Feuchte trocknet die stark hygroskopische LiCl-
Schicht aus, wodurch der Stromfluß aufhört und die
Schicht wieder abkühlt, so daß wieder Wasser aus
der umgebenden Luft aufgenommen wird. Zwischen Trocknung und Wasseraufnahme stellt sich ein bis zwei
Minuten nach einer Luftfeuchteänderung eine Gleichgewichtstemperatur ein, die nur von der absoluten Luftfeuchte (Wasserdampfteildruck) abhängt.

Eine solche Feuchtemeßeinrichtung nutzt die Eigenschaft des chemisch außerordentlich stabilen Salzes Lithiumchlorid aus, das bei einer relativen Luftfeuchte über 10% aus der Luft Wasser absorbiert und es unterhalb 10% Luftfeuchte wieder abgibt. Da feuchtes LiCl elektrolytisch leitend ist, heizt sich eine geeignet angeordnete und an Wechselspannung liegende LiCl-Schicht selbstregelnd auf die Temperatur auf, bei der die relative Feuchte der Oberflächengrenzschicht gerade 10% beträgt. Die eingeregelte Temperatur der Grenzschicht ist damit ein eindeutiges Maß für die absolute Umgebungsluftfeuchte. Bedingt durch die Masse des Thermometers und das saugfähige Gewebe beträgt die Ansprechzeit der bekannten Feuchtemeßeinrichtung mehrere Minuten, was für viele Meßaufgaben zu träge ist, insbesondere bei geringen Gasfeuchten. Außerdem ist die bekannte Feuchtemeßeinrichtung verhältnismäßig groß und erfordert viel Meßgas, weil wegen der großen Oberfläche eine erhebliche Wassermenge an dem Meßvorgang beteiligt ist.

Um hier eine Verbesserung zu schaffen, wurde vom Anmelder und Erfinder eine Feuchtemeßeinrichtung vorgeschlagen (DE-C 1 648 290), bei der die Heizerschicht und die hygroskopische, mit LiCl belegte Feuchtefühlschicht in einer einzigen Schicht integriert sind, in der auch die Regelung selbsttätig erfolgt. Dies belastet die Feuchtefühlschicht durch die Regelung, was hohen Stromverbrauch, ein immer noch nicht voll befriedigendes Ansprechverhalten und einen vergleichsweise großen Mengenbedarf an LiCl zur Folge hat. Außerdem kann nicht beliebig edles und damit korrosionsfestes Elektrodenmaterial verwendet werden. Gold löst sich nämlich aufgrund des hohen Stromes elektrolytisch, während Platinmetalle elektrolysebedingt wasserstoffbrüchig werden.

Es ist eine Feuchtemeßeinrichtung der im Oberbegriff des Anspruchs 1 beschriebenen Art bekannt (DE-OS 2 416 179), bei der die Feuchtefühlschicht von einem mit Lithiumchlorid getränkten Glasfasergewebe gebildet ist, welches mittels einer Schraubenverbindung mit den weiteren Teilen der Einrichtung verbunden ist. Die gewünschte Empfindlichkeit und Schnelligkeit der Feuchtemessung läßt sich mit einer derartigen Einrichtung nicht erzielen.

Es ist bei Feuchtemessern auch schon die Sandwichbauweise bekannt, wobei jedoch ein externer Regler zum Regeln der Temperatur der auch hier mit der Feuchtefühlschicht integrierten Heizerschicht nicht vorgesehen ist (JP-A-52-75 388), so daß prinzipiell die gleichen Nachteile vorhanden sind wie bei der oben schon diskutierten DE-C-1 648 290.

Der Erfindung liegt die Aufgabe zugrunde, eine Feuchtemeßeinrichtung der im Oberbegriff des Anspruchs 1 beschriebenen Art zu schaffen, bei der die Nachteile der bekannten Einrichtungen vermieden sind, die unter Ersatz teurer Handfertigung unter weiterer Miniaturisierung maschinell herstellbar ist und die vor allem die Feuchte schneller und genauer als bisher erfaßt und anzeigt.

Zur Lösung dieser Aufgabe sind gemäß der Erfindung die Merkmale des Anspruchs 1 vorgesehen.

Bei der Feuchtemeßeinrichtung nach der Erfindung ist erreicht, daß durch Kompensation mittels des externen Reglers der Wasserdampfdruck der Oberfläche der hygroskopischen Feuchtefühlschicht mit dem Wasserdampfteildruck des umgebenden Mediums im Gleichgewicht gehalten ist, wobei die Feuchtefühlschicht weder Wasser abgibt noch aufnimmt und somit eine gleichbleibende elektrische Leitfähigkeit aufweist. Dadurch stellt sich die von der Temperaturfühlschicht erfaßte Fühlertemperatur als zum Wasserdampfteildruck proportionales Meßwertsignal dar.

Bei der neuen Feuchtemeßeinrichtung wird aufgrund der Trennung des Meßstromes und des von der externen Regelelektronik abgegebenen Heizregelstroms (Stellstroms) die Feuchtefühlschicht um mehrere Zehnerpotenzen weniger belastet als bei einer Lösung ohne externen Regler.

Die neue Feuchtemeßeinrichtung hat ferner eine wesentlich höhere Regelverstärkung und wird außerdem vorteilhaft mit einem P-Regelverhalten betrieben.

Im Vergleich zu den üblichen bekannten Einrichtungen zeigt die neue Feuchtemeßeinrichtung um mindestens den Faktor 10 schneller an.

Jede Schicht kann in der Technik der Dickfilmschaltungen durch Maskenbedampfung, durch Siebdruck mit Einbrennpasten oder durch Ätzen hergestellt werden.

Vorteilhafte Ausgestaltungen der Erfindung sind in den Unteransprüchen unter Schutz gestellt.

Die Erfindung ist im folgenden anhand schematischer Zeichnungen mit weiteren Einzelheiten anhand eines Ausführungsbeispiels näher erläutert. Es zeigen:

Fig. 1 eine perspektivische Draufsicht auf einen Feuchtefühler gemäß der Erfindung;

Fig. 2 eine perspektivische Unteransicht des Feuchtefühlers nach Fig. 1 und

Fig. 3 eine Prinzipdarstellung einer Feuchtemeßeinrichtung mit einem Feuchtefühler gemäß der Erfindung in auseinandergezogener Darstellung mit externer Regelelektronik und externer Anzeige.

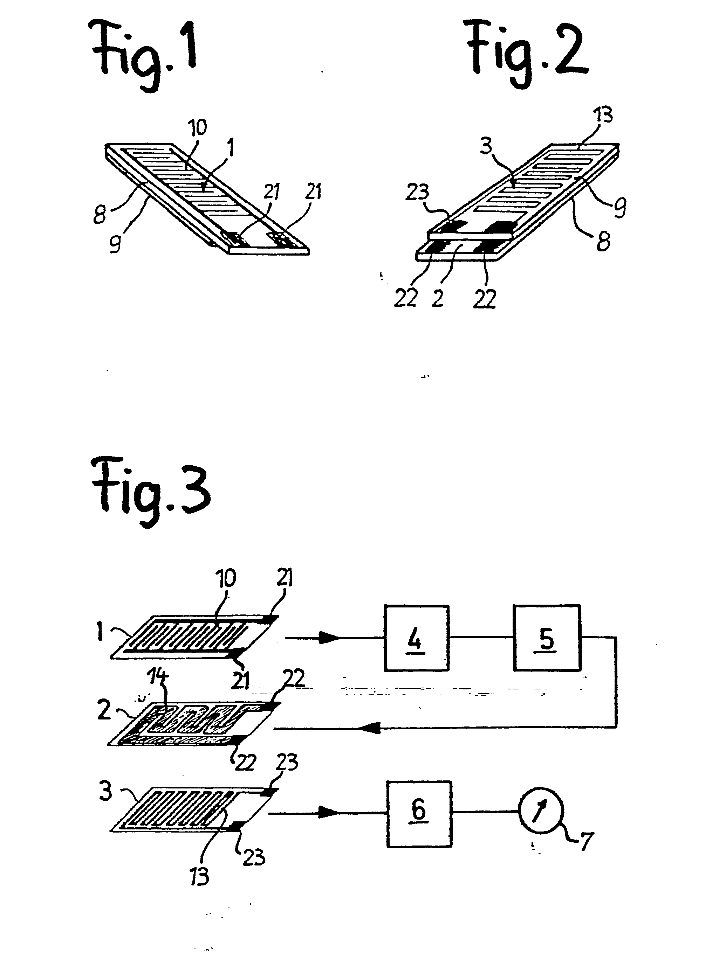

Der Feuchtefühler nach den Fig. 1 und 2 weist eine hygroskopische Feuchtefühlschicht 1, eine Heizerschicht 2 und eine Temperaturfühlschicht 3 auf. Die Feuchtefühlschicht 1 und die Heizerschicht 2 sind auf den beiden entgegengesetzten Seiten eines die Wärme gut leitenden Oxidkeramikplättchens oder -chips 8 aufgedampft, siebgedruckt oder eingeätzt. Statt der Oxidkeramik, wie sie in der Dickschichttechnik Verwendung findet, kann als Trägermaterial auch ein temperaturfester Kunststoff dienen.

Die Feuchtefühlschicht 1 umfaßt eine auf die Vorderseite des Oxidkeramikplättchens 8 mit eingebrannter Goldpaste siebgedruckte Kammelektrode 10. Diese bildet eine gute Haftgrundlage für eine wenige Molekülstärken dicke Oberflächenschicht aus LiCl (nicht gezeigt). Zur Verbesserung der Haftung und zur Erzielung größerer Gleichmäßigkeit der LiCl-Schicht ist die Oberfläche des Keramikplättchens aufgerauht; z.B. durch Ätzen.

Die Kammelektrode 10 hat Anschlußkontakte 21 an den Enden der beiden Kammstege. Sie umgrenzt bei einer konkreten Ausführung eine Innenfläche von 7mm². Nur diese Innenfläche ist mit LiCl in einer Gesamtmenge von 20µg und mit einer Schichtstärke von etwa 0,5 µm belegt.

Die Heizerschicht weist eine Heizwiderstandsleitung 14 aus Platin auf, die mäanderförmig in einer Ebene gemäß Fig. 3 in die Rückseite des Oxidkeramikplättchens 8 eingebrannt ist und an Kontakten 22 endet. Die Temperaturfühlschicht 3 schließlich weist einen ebenfalls mäanderförmig ausgelegten Temperaturmeßwiderstand aus Platin auf, der auf die eine Seite eines weiteren Oxidkeramikplättchens 9 aufgedruckt ist und dessen beide Enden an den Kontakten 23 enden. Das Oxidkeramikplättchen 9 ist auf die Rückseite des Oxidkeramikplättchens 8 aufgeglast.

Gemäß Fig. 3 ist zwischen der Feuchtefühlschicht 1 und der Heizerschicht 2 eine externe Regelelektronik mit einem P-Regler 5 und einem vorgeschalteten elektrischen Leitfähigkeitsmeßumformer 4 vorgesehen. Die Eingangsgröße in diese Regelelektronik ist der von der Kammelektrode 10 abgegebene für die elektrische Leitfähigkeit der LiCl-Oberflächenschicht maßgebende Wechselstrom, während der Ausgang des Reglers 5 den Heizregelstrom für die Heizwiderstandsleitung 14 bereitstellt.

An die Temperaturfühlschicht 3 ist ein Widerstandsmeßumformer 6 zum Erfassen der Temperatur des Feuchtefühlers angeschlossen. Dem Widerstandsmeßumformer 6 ist eine Anzeige 7 nachgeschaltet, welche die sich jeweils in Abhängigkeit von der Feuchte einstellende Temperatur anzeigt und in absoluter Feuchte geeicht ist.

Messungen haben gezeigt, daß die Kompensation bei einer ausgeführten Konstruktion noch bei einer Regelkreisverstärkung von 500 stabil arbeitete. Dabei verursachte eine Absenkung der Regelkreisverstärkung um 10% eine Sensortemperaturabsenkung von nur 0,03°K.

Der wichtigste Vorteil der beschriebenen Feuchtemeßeinrichtung ist die hohe Anzeigegeschwindigkeit: einschließlich des Einschwingvorganges beträgt die vollständige Einstellzeit bei einem ausgeführten Gerät etwa 1/2 Minute. Dies liegt wesentlich an der erfindungsgemäß äußerst gering verwendeten Masse und Dicke der LiCl-Schicht, welche wiederum nur unter Verwendung des externen Reglers realisierbar war; denn für einen wirksamen Selbstregeleffekt wie oben anhand der DE-C 1 648 290 beschrieben wäre eine solch geringe LiCl-Menge zu klein.

Im folgenden sind zur Veranschaulichung der Leistungsfähigkeit der neuen Feuchtemeßeinrichtung Daten gegenübergestellt, die an einem Muster der neuen Feuchtemeßeinrichtung und an einer herkömmlichen Feuchtemeßeinrichtung der eingangs beschriebenen bekannten Art
gewonnen wurden.

| | neuer Fühler | bisheriger Fühle |
|---|---|---|
| Fühlermaße in mm | 20 x 8 x 1,5 | 70 x 5,8 Durchm |
| Fühlervolumen in cm³ | 0,24 | 1,9 |
| Fühleroberfläche in cm² | 4 | 14 |
| Elektroden | Goldkamm, Stege 0,15 breit im Abst: 0,3 mm. | 2x33 Windungen A⸱ 0,3 mm Durchmess⸱ |
| effektives Meßfeld | 0,3 x 120 mm | 0,7 x 1000 mm |
| Einschalt-Sensorstrom | 0,2 mA | 730 mA |
| mittlerer Betriebsstrom über Sensorelektroden | kleiner 0,01 mA | 30 mA |
| mittl. Betriebsleistung am Sensor | 1 Mikrowatt | 0,7 Watt |
| mittl. Sensorleistung auf Sensormeßfeld bezogen | kleiner 3 µW/cm² | 0,1 W/cm² |

Die Gegenüberstellung veranschaulicht die Überlegenheit der neuen Feuchtemeßeinrichtung insbesondere
hinsichtlich Abmessungen und Energieverbrauch.

Die neue Feuchtemeßeinrichtung unterscheidet sich
im übrigen von der bekannten Einrichtung nach DE-C
1 648 290 durch folgende Eigenschaften:

1. um mindestens Faktor 10 schneller anzeigend,
2. Regeldynamik ohne starke Überschwingung;
3. stabilere Kompensation auch bei hoher Regelverstärkung, kein Strömungseinfluß;

0154999

4. korrosionsfester durch Gold- bzw. Platinelektroden;
5. durch geringeren Wasserbedarf nach unten erweiterter Meßbereich;
6. zumindest Verdoppelung des Wartungsabstandes;
7. durch Gleichstromheizung und geringeren Leistungsbedarf auch nichtstationärer Betrieb möglich;
8. gleichmäßiger durch maschinelle Herstellung.

**Dr.-Ing. Roland Liesegang**

Patentanwalt
European Patent Attorney

0154999

Sckellstrasse 1
D-8000 München 80
Telefon (089) 4 48 24 96

Telex 5214382 pali d
Telekopierer (089) 272 04 80, 272 04 81
Telegramme patemus munchen

Postscheck München 394 18-802
Hypobank München 6 400 194 333
Reuschelbank Munchen 2 603 007

DR.-ING. WINFRIED LÜCK

Karlsruhe, Bundesrepubkik Deutschland

EU 061 02

Wasserdampfdruckkompensierende Feuchtemeßeinrichtung

Ansprüche

1. Wasserdampfdruckkompensierende Feuchtemeßeinrichtung, bei der eine mit einer Oberflächenschicht aus Lithiumchlorid versehene Feuchtefühlschicht (1) in einer Gas- bzw. Luft-Umgebung mit dem zu messenden Wasserdampfteildruck laufend und automatisch auf die Umwandlungstemperatur aufgeheizt wird, bei welcher die Feuchtefühlschicht weder Wasser abgeben noch aufnehmen kann und die elektrische Leitfähigkeit der Feuchtefühlschicht automatisch an ihrer Minimalwertgrenze gehalten ist, und die sich einstellende Umwandlungstemperatur als eindeutiges, vom Luft- bzw. Gasdruck und von der Luft- bzw. Gastemperatur unabhängiges Maß des Wasserdampfteildruckes mittels einer Temperaturfühlschicht (3) erfaßt wird, wobei zwischen der Feuchtefühlschicht (1) und der Temperaturfühlschicht (3) eine gesonderte Heizerschicht (2) angeordnet und ein externer Regler (4,5) zum Regeln der elektrischen Leitfähigkeit der Feuchtefühlschicht (1) vorgesehen sind und wobei der Regler über den

Heizstrom die Heizerschicht (2) und die damit thermisch gekoppelte Feuchtefühlschicht (1) auf die Umwandlungstemperatur regelt, dadurch g e - k e n n z e i c h n e t, daß die Feuchtefühlschicht (1) eine Kammelektrode (10) aus einem Edelmetall, sowie eine auf die Elektrodenoberfläche aufgebrachte, extrem dünne Oberflächenschicht aus Lithiumchlorid aufweist, daß die Heizer- und die Temperaturfühlschicht (2,3) mäanderförmige, ebene Leitungen (13,14) aufweisen und daß die Feuchtefühlschicht (1), die Heizerschicht (2) und die Temperaturfühlschicht (3) in Drucktechnik auf zwei zusammengeklebte, wärmeleitfähige Keramikplättchen (8,9) aufgebracht sind.

2. Einrichtung nach Anspruch 1, dadurch g e k e n n - z e i c h n e t, daß die Feuchtefühlschicht (1) auf die Vorderseite und die Heizerschicht (2) auf die Rückseite eines Keramikplättchens (8) aufgedruckt sind und die Temperaturfühlschicht auf ein weiteres Keramikplättchen (9) aufgedruckt ist, welches mit der Rückseite des erstgenannten Keramikplättchens (8) verklebt ist.

3. Einrichtung nach Anspruch 1 oder 2, dadurch g e - k e n n z e i c h n e t, daß die Stärke der Oberflächenschicht aus Lithiumchlorid im Bereich von wenigen Molekülstärken, vorzugsweise in der Größenordnung von 0,5 µm, liegt.

4. Einrichtung nach Anspruch 1 bis 3, dadurch g e - k e n n z e i c h n e t, daß die Oberflächenschicht aus Lithiumchlorid auf eine aufgerauhte, insbesondere aufgeätzte Oberfläche eines Keramikplättchens (8) aufgebracht ist.

- 3 -

0154999

5. Einrichtung nach einem der Ansprüche 1 bis 4, dadurch g e k e n n z e i c h n e t, daß der externe Regler (5) P-Regelverhalten und eine große Regelverstärkung aufweist.

6. Einrichtung nach einem der Ansprüche 1 bis 5, dadurch g e k e n n z e i c h n e t, daß zwischen den externen Regler (5) und die Feuchtefühlschicht (1) ein Leitfähigkeitsmeßumformer (4) eingeschaltet ist.

7. Einrichtung nach einem der Ansprüche 1 bis 6, dadurch g e k e n n z e i c h n e t, daß das Edelmetall Gold oder Platin ist.

8. Einrichtung nach einem der Ansprüche 1 bis 6, dadurch g e k e n n z e i c h n e t, daß ein Keramikplättchen (8) auf seiner außen liegenden Vorderseite mit der aus Gold bestehenden Kammelektrode (10) bedruckt ist, daß die von der Kammelektrode eingegrenzte Innenfläche mit einer Spur Lithiumchlorid belegt ist, daß in die Rückseite des Keramikplättchens (8) eine mäanderförmige Heizwiderstandsleitung (14) aus Platin eingebrannt ist, und daß ein mäanderförmiger Temperaturmeßwiderstand (13) aus Platin auf die Rückseite des Keramikplättchens (8) aufgeglast ist.

9. Einrichtung nach einem der Ansprüche 1 bis 8, dadurch g e k e n n z e i c h n e t, daß der Temperaturfühlschicht (3) ein Widerstandsmeßumformer (6) nachgeschaltet ist, der die gemessene Temperatur in ein elektrisches Signal umsetzt und dieses einer Anzeige (7) zuführt.

0154999

10. Einrichtung nach einem der Ansprüche 1 bis 9,
dadurch g e k e n n z e i c h n e t, daß die
mit dem Lithiumchlorid belegte Innenfläche der
Kammelektrode nicht mehr als 25 mm², vorzugsweise
etwa 7mm², beträgt.

0154999

# Fig.1

10  1  21  21
8
9

# Fig.2

13
3  9
23  8
22  2  22

# Fig.3

10  21
1
14  21
2  22
22
23
3  13  23
4  5
6  1  7